(19) Europäisches Patentamt
European Patent Office
Office européen des brevets

(11) EP 2 960 829 A2

(12) **EUROPEAN PATENT APPLICATION**

(43) Date of publication:
**30.12.2015 Bulletin 2015/53**

(51) Int Cl.:
***G06K 9/00*** *(2006.01)*

(21) Application number: **15173207.0**

(22) Date of filing: **22.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **24.06.2014 JP 2014129601**

(71) Applicant: **Toyota Jidosha Kabushiki Kaisha Toyota-shi, Aichi-ken 471-8571 (JP)**

(72) Inventors:
• **TAKEMAE, Yoshinao**
  **Aichi-ken, 471-8571 (JP)**
• **KIDONO, Kiyosumi**
  **Aichi-ken, 480-1192 (JP)**

(74) Representative: **D Young & Co LLP**
   **120 Holborn**
   **London EC1N 2DY (GB)**

(54) **Lane boundary estimation device and lane boundary estimation method**

(57)    A lane boundary estimation device (1) includes: a level difference detection unit (1c) detecting a first part of a solid lane boundary; a base image setting unit (1d) setting a first image area in a most distant area in the first part as a template image; a search area setting unit (1e) setting a search area from the most distant area; and a comparison determination unit (1f) detecting a boundary candidate point for a second part of the solid lane boundary by performing template comparison in the search area. When a detection evaluation value of the first part is lower than a predetermined value and the search area includes a low-evaluation search area, the base image setting unit re-sets a second image area, nearer to a vehicle than the low-evaluation search area, as the template image. The search area setting unit skips the low-evaluation search area and re-sets a new search area.

FIG. 2

EP 2 960 829 A2

## Description

BACKGROUND OF THE INVENTION

1. Field of the Invention

The invention relates to a lane boundary estimation device and a lane boundary estimation method.

2. Description of the Related Art

Conventionally, a lane boundary estimation technology is reported.

For example, Japanese Patent Application Publication No. 2013-161190 (JP 2013-161190 A) describes a technology that detects a three-dimensional lane boundary (solid lane boundary), such as a curb, in the direction from the near side to the distant side of the vehicle, based on the result of level difference detection that is performed for detecting a position, where there is a level difference, in the traffic environment around the vehicle. After that, the technology acquires the luminance image of the detected solid lane boundary in the most distant area as an image for use in template comparison and performs template comparison from the most distant area to a further distant area. By doing so, the technology estimates the solid lane boundary in the distant area in which the solid lane boundary could otherwise be detected from the result of level difference detection.

Japanese Patent Application Publication No. 2013-142972 (JP 2013-142972 A) describes a technology that selects the image of a road boundary from the captured image of the area near to the vehicle to create a template, changes the scaling of the template according to the distance from the vehicle to the distance area of the vehicle, detects the road boundary from the captured image of the distant area through template matching processing and, based on the road boundary detection result, recognizes the lane in front of the vehicle.

However, according to the related art, a solid lane boundary, such as a curb, cannot sometimes be detected as a spatially continuous object, for example, because a solid lane boundary, such as a curb, is not continuous at a position where there is a vehicle entrance/exit or because the solid lane boundary is hidden by other solid objects such as a telephone pole. In such a case, the detection of a solid lane boundary based on level difference detection or based on template comparison is interrupted in the related art, sometimes with the result that a solid lane boundary in the distant area cannot be estimated.

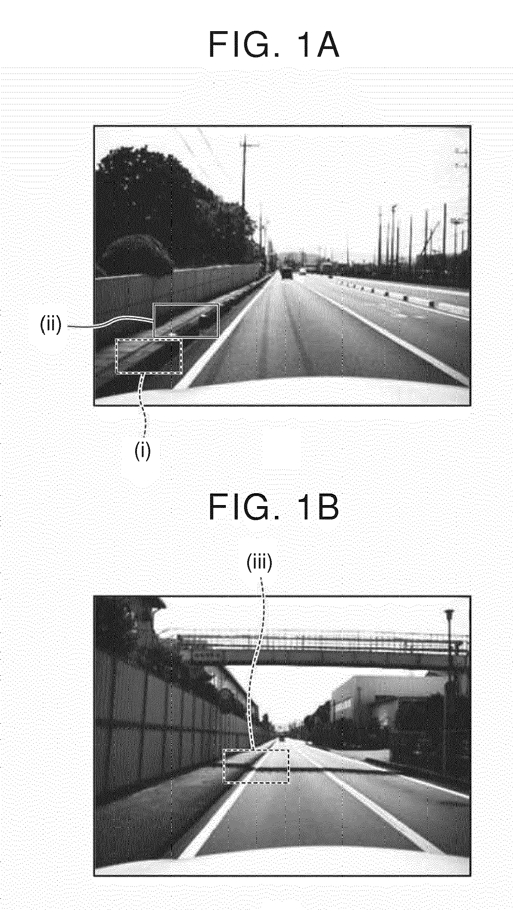

An example of a situation in which a solid lane boundary in the distant area is not likely to be detected is described below with reference to FIG. 1A and FIG. 1B. FIG. 1A and FIG. 1B show an example of a scene in which the search for a distant area through template comparison is difficult. FIG. 1A shows a scene in which the curb boundary is not continuous, and FIG. 1B shows a scene in which the bridge casts a shadow on the curb boundary.

The template image is set by selecting a part of the image based on the height or the edge. For example, assume that the dotted frame (i) in FIG. 1A is set as a template image. The search for the neighboring distant area, if performed based on that template image, does not produce a good template comparison result, because the curb boundary within the solid frame (ii) includes a part where the curb is not continuous. In addition, because template comparison is based on the luminance information, the change in the light-and-shade density is small within the dotted frame (iii) where the shadow of a surrounding object, such as a bridge, falls on the curb boundary as shown in FIG. 1B. This makes the template comparison unstable, sometimes resulting in inaccurate position detection.

Therefore, in the related art, when the curb is not continuous as shown in FIG. 1A, when the shadow of a surrounding object (such as a bridge) falls on the road surface as shown in FIG. 1B, or when there is no side-ditch cover, an accurate position cannot necessarily be identified with the use of the selected template and, as a result, the distant area search is interrupted. Possible solutions to this problem are to adjust the lightness of the template image or to generate a prediction template through geometric transformation. However, it is difficult to address this problem with these solutions because such a local texture change is difficult to predict. If any of the positions described above is identified by the template generated in such a manner, there is still a possibility that the identified position cannot be confirmed as a correct road boundary.

SUMMARY OF THE INVENTION

The present invention provides a lane boundary estimation device and a lane boundary estimation method that can reduce the generation of a situation in which a solid lane boundary in a distant area cannot be estimated.

A lane boundary estimation device according to a first aspect of the present invention, includes: an image acquisition unit configured to acquire image data generated by capturing a traffic environment around a vehicle; a distance image generation unit configured to generate a distance image based on the image data; a level difference detection unit configured to detect a first part of a solid lane boundary from a near side of the vehicle to a distant side by performing level difference detection to extract, based on the distance image, a position where a height of the solid lane boundary changes, the solid lane boundary being a three-dimensional lane boundary; a base image setting unit configured to set a first image area in a most distant area as a template image, the most distant area being an image area that is most distant from the vehicle in the first part; a search area setting unit configured to set a search area from the most distant area to a further distant side; a comparison determination unit configured to detect a boundary candidate point from the most distant area to the further distant side by performing template comparison in which the search area is scanned for an area that matches the template image, the boundary candidate point being a candidate for a second part of the solid lane boundary; and a road boundary detection unit configured to detect the solid lane boundary in the traffic environment based on a detection result of the first part by the level difference detection unit and a detection result of the boundary candidate point by the comparison determination unit. When a detection evaluation value of the first part is lower than a first predetermined value and the search area includes a low-evaluation search area, the base image setting unit re-sets a second image area as the template image, the second image area being nearer to the vehicle than the low-evaluation search area. The low-evaluation search area is a search area where a comparison evaluation value of the boundary candidate point is lower than a second predetermined value. The search area setting unit is configured to skip the low-evaluation search area and to re-set a new search area from a further image area than the low-evaluation search area to a further distant side. The comparison determination unit is configured to perform the template comparison in the search area that is re-set.

In the first aspect of the present invention, the level difference detection unit may be configured to further perform the level difference detection in the search area. The road boundary detection unit may detect the solid lane boundary in the traffic environment with priority placed on the detection result of the first part rather than on the detection result of the boundary candidate point, when the detection evaluation value of the first part is large as compared when the detection evaluation value is small.

In the first aspect of the present invention, when the detection evaluation value of the first part is larger than a base value, the road boundary detection unit may detect the solid lane boundary in the traffic environment with priority placed on the detection result of the first part rather than on the detection result of the boundary candidate point. In addition, when the detection evaluation value of the first part is smaller than the base value, the road boundary detection unit may detect the solid lane boundary in the traffic environment with priority placed on the detection result of the boundary candidate point rather than on the detection result of the first part.

In the first aspect of the present invention, the search area setting unit may be configured to predict an area where the boundary candidate point is likely to be present based on the detection result of the first part, and may be configured to set the search area around the predicted area.

In the first aspect of the present invention, the first image area may have a predetermined size. The second image area may have a predetermined size.

A lane boundary estimation method according to a second aspect of the present invention, includes: acquiring image data generated by capturing a traffic environment around a vehicle; generating a distance image based on the image data; detecting a first part of a solid lane boundary from a near side of the vehicle to a distant side by performing level difference detection to extract, based on the distance image, a position where a height of the solid lane boundary changes, the solid lane boundary being a three-dimensional lane boundary; setting a first image area in a most distant area as a template image, the most distant area being an image area that is most distant from the vehicle in the first part; setting a search area from the most distant area to a further distant side; detecting a boundary candidate point from the most distant area to the further distant side by performing template comparison in which the search area is scanned for an area that matches the template image, the boundary candidate point being a candidate for a second part of the solid lane boundary; and detecting the solid lane boundary in the traffic environment based on a detection result of the first part and a detection result of the boundary candidate point. When a detection evaluation value of the first part is lower than a first predetermined value and the search area includes a low-evaluation search area, a second image area is re-set as the template image, the second image area being nearer to the vehicle than the low-evaluation search area. The low-evaluation search area is a search area where a comparison evaluation value of the boundary candidate point is lower than a second predetermined value. When the search area includes the low-evaluation search area, the low-evaluation search area is skipped and a new search area is re-set from a further image area than the low-evaluation search area to a further distant side. The template comparison is performed in the search area that is re-set.

In the second aspect of the present invention, the first image area may have a predetermined size. The second image area may have a predetermined size.

The lane boundary estimation device and the lane boundary estimation method in the first and second aspects of the present invention achieve the effect of reducing a situation in which a solid lane boundary in a distant area cannot be estimated.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1A and FIG. 1B are diagrams showing examples of scenes in which a distant search through template comparison is difficult;
FIG. 2 is a diagram showing a configuration of a lane boundary estimation device in a first embodiment;

FIG. 3 is a diagram showing examples of an input image and a distance image;
FIG. 4 is a diagram showing an example of processing for detecting a solid lane boundary;
FIG. 5 is a diagram showing an example of the setting of a road surface area;
FIG. 6 is a diagram showing an example of the setting of a search area and an example of a skip search;
FIG. 7 is a diagram showing an example of processing for applying a straight line to a group of boundary candidate points;
FIG. 8 is a diagram showing an example of the effects of a skip search;
FIG. 9 is a flowchart showing an example of the basic processing of the lane boundary estimation device in the first embodiment;
FIG. 10 is a diagram showing an example of template switching logic A;
FIG. 11 is a flowchart showing the detailed processing of template switching logic A;
FIG. 12 is a diagram showing an example of template switching logic B;
FIG. 13 is a flowchart showing the detailed processing of template switching logic B;
FIG. 14 is a diagram showing a configuration of a lane boundary estimation device in a second embodiment; and
FIG. 15 is a flowchart showing an example of the basic processing of the lane boundary estimation device in the second embodiment.

DETAILED DESCRIPTION OF EMBODIMENTS

Embodiments of a lane boundary estimation device and a lane boundary estimation method of the present invention are described in detail below with reference to the drawings. The embodiments below are not intended to limit the scope of the present invention. Elements described in the embodiments include their variations readily thought of by those skilled in the art and substantially equivalent elements.

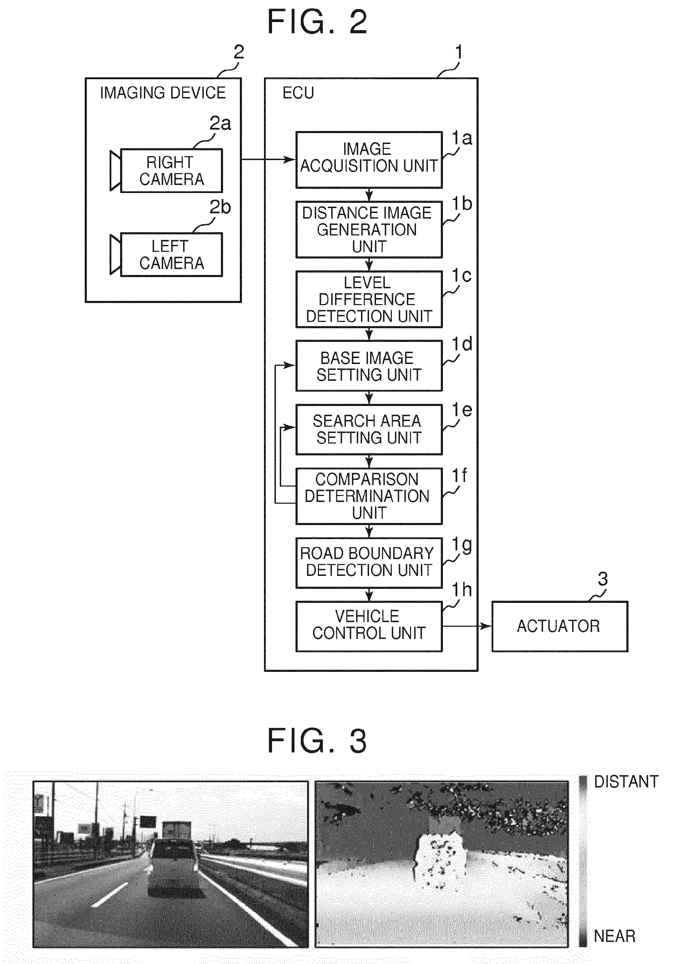

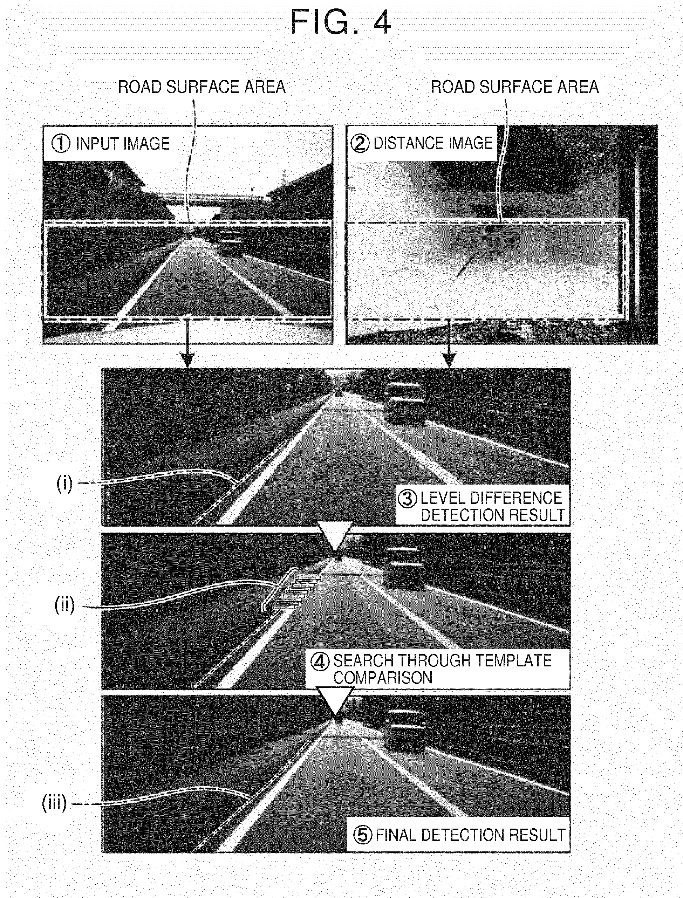

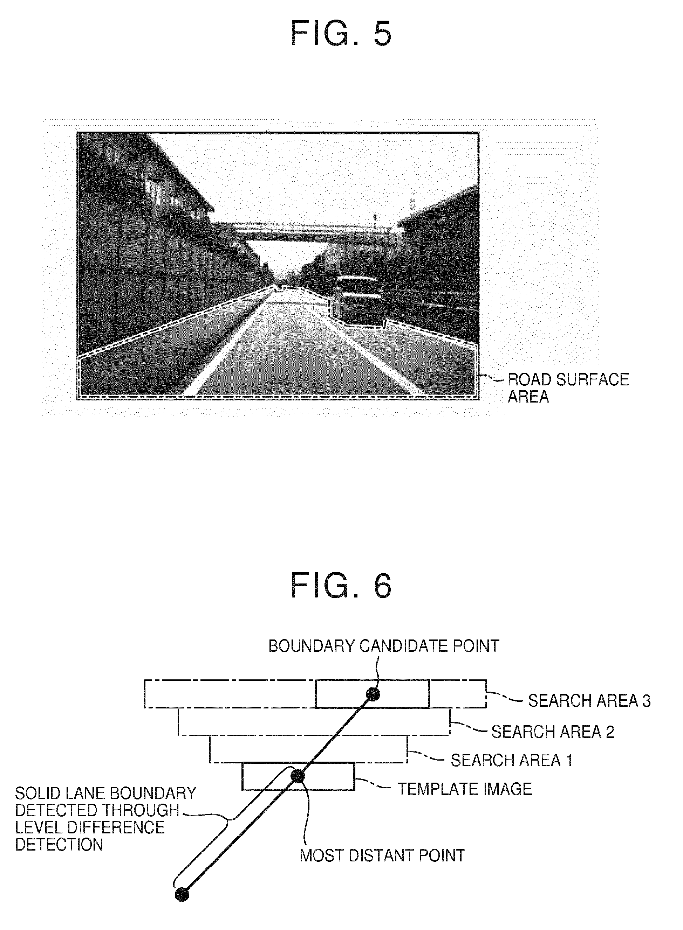

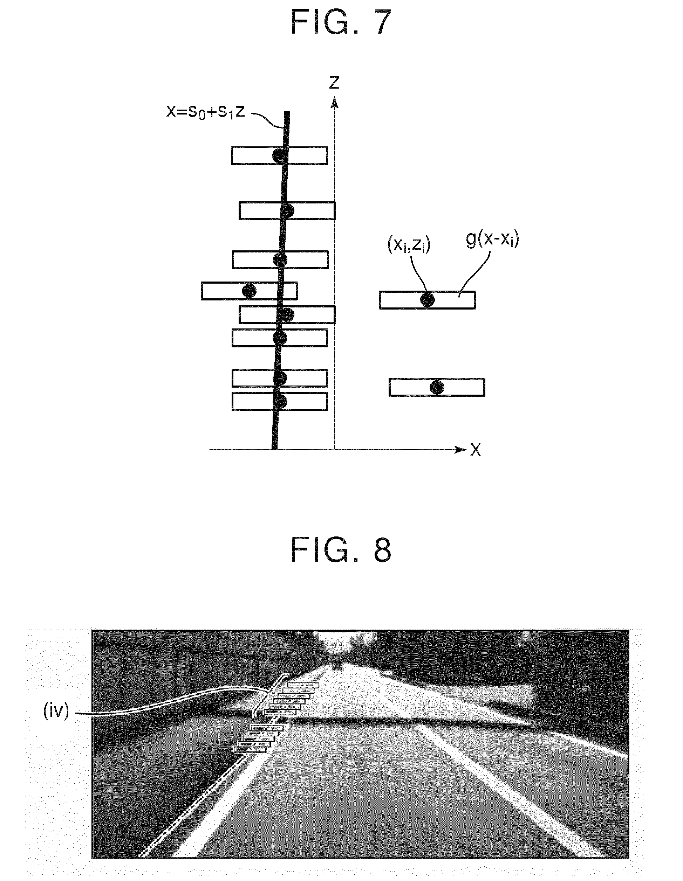

The configuration of a lane boundary estimation device in a first embodiment is described below with reference to FIG. 2 to FIG. 8. FIG. 2 is a diagram showing a configuration of the lane boundary estimation device in the first embodiment. FIG. 3 is a diagram showing an example of an input image and a distance image. FIG. 4 is a diagram showing an example of processing for detecting a solid lane boundary. FIG. 5 is a diagram showing an example of the setting of a road surface area. FIG. 6 is a diagram showing an example of the setting of a search area and an example of a skip search. FIG. 7 is a diagram showing an example of processing for applying a straight line to a group of boundary candidate points. FIG. 8 is a diagram showing an example of the effects of a skip search.

As shown in FIG. 2, the lane boundary estimation device in the first embodiment, mounted on a vehicle (host vehicle), typically includes an ECU 1, an imaging device 2, and an actuator 3.

The ECU 1, which controls the driving of the units of the vehicle, is an electronic control unit mainly configured by a microcomputer that includes the CPU, ROM, RAM, and interface. The ECU 1, electrically connected to the imaging device 2, receives the electrical signal corresponding to the detection result of the imaging device 2. The ECU 1 performs various types of arithmetic processing according to the electrical signal corresponding to the detection result. For example, the ECU 1 estimates a three-dimensional lane boundary (solid lane boundary), such as a curb, present in a lane based on the detection result of the imaging device 2. The ECU 1 outputs a control command, corresponding to the arithmetic processing result including the detection result of a solid lane boundary, to control the operation of the actuator 3 electrically connected to the ECU 1. For example, the ECU 1 outputs the control signal, generated based on the arithmetic processing result, to the actuator 3 and operates the actuator 3 to perform the driving support control for controlling the behavior of the vehicle.

The processing units of the ECU 1 are described below in detail. The ECU 1 includes at least an image acquisition unit 1a, a distance image generation unit 1b, a level difference detection unit 1c, a base image setting unit 1d, a search area setting unit 1e, a comparison determination unit 1f, a road boundary detection unit 1g, and a vehicle control unit 1h. The processing units (image acquisition unit 1a to vehicle control unit 1h) of the ECU 1 shown in FIG. 2 are described in detail below by referring to FIG. 3 to FIG. 8 as necessary.

The image acquisition unit 1a of the ECU 1 acquires image data generated by capturing the traffic environment around the vehicle. In this embodiment, the traffic environment around the vehicle includes the road environment around the vehicle such as the road environment in front, on side, and in back of the vehicle. In the description of the embodiments below, an example of the road environment in front of the vehicle (that is, in the traveling direction of the vehicle) is described as the traffic environment around the vehicle. The image acquisition unit 1a acquires a brightness image R and a brightness image L, which are output respectively from a right camera 2a and a left camera 2b of the imaging device 2, as image data. The image data may be a monochrome image or a color image. The image acquisition unit 1a also has the function to perform the image distortion correction processing. In the image distortion correction processing, the brightness image R and the brightness image L are corrected to eliminate distortion in the lens of the right camera 2a and left camera 2b and to make the optical axes of the right camera 2a and the left camera 2b parallel. The brightness image R and the brightness image L, which are acquired, and the distortions of which are corrected, by the image acquisition unit 1a, are used for the processing of the distance image generation unit 1b.

The imaging device 2 captures the traffic environment in the traveling direction of the vehicle. The imaging wavelength range of the imaging device 2 may be that of a visible light or a near-infrared ray. The imaging device 2 is configured by the right camera 2a and the left camera 2b both of which can capture an image. The right camera 2a is mounted on the front-right side of the vehicle, and the left camera 2b on the front-left side of the vehicle. The right camera 2a and the left camera 2b form a stereo camera. The right camera 2a outputs the brightness image R, an image generated by capturing the environment in the traveling direction of the vehicle, to the image acquisition unit 1a of the ECU 1 as image data. Similarly, the left camera 2b outputs the brightness image L, an image generated by capturing the environment in the traveling direction of the vehicle, to the image acquisition unit 1a of the ECU 1 as image data. In this embodiment, because a distance image is generated by the distance image generation unit 1b that will be described later, a stereo-configured camera is used as an example of the imaging device 2. However, if a template image is set by the base image setting unit 1d, which will be described later, based on the information other than the information on the distance (for example, information on the edge), the imaging device 2 need not be a stereo-configured camera but may be a monocular camera. In addition, the distance information may also be acquired by another sensor such as a laser radar, in which case, too, the imaging device 2 may be a monocular camera.

The distance image generation unit 1b of the ECU 1 generates a distance image based on the image data acquired by the image acquisition unit 1a. The distance image generation unit 1b generates a distance image by calculating the disparity and measuring the distance based on the brightness image R and the brightness image L which are acquired, and the distortions of which are corrected, by the image acquisition unit 1a. In this embodiment, the distance image generation unit 1b receives a stereo image (an image including the brightness image R and the brightness image L), generated by capturing the road environment in the traveling direction of the vehicle, such as that shown in the left half of FIG. 3. From this stereo image, the distance image generation unit 1b generates a distance image such as that shown in the right half of FIG. 3. Although a stereo image includes the brightness image R and the brightness image L, one image is shown as an example in the left half of FIG. 3 for the sake of description. To generate a distance image in this embodiment, the use of the dense stereo technology, which calculates dense distance information in the whole image, is assumed as shown in the right half of FIG. 3. The SGM method or the ELAS method is used as the dense stereo technology. For example, the method described in "H.Hirschumuller,"Accurate and Efficient Stereo Processing by Semi-Global Matching and Mutual Information," Proc.IEEE Conf. on Computer Vision and Pattern Recognition, vol.2, pp.807-814, 2005" may be used as the SGM method.

The method described in "A. Geiger, M.Roser and R.Urtasun, "Efficient large-scale stereo matching, " Proc.Asian Conf. on Computer Vision, 2010" may be used as the ELAS method. In this embodiment, though both the brightness image R and the brightness image L, acquired by the image acquisition unit 1a as the image data, are used when the distance image generation unit 1b generates a distance image, one of the brightness image R and the brightness image L is used as the image data in the processing described below.

The level difference detection unit 1c of the ECU 1 detects a solid lane boundary, which is a three-dimensional lane boundary, in the direction from the near side of the vehicle to the distant side. To do so, the level difference detection unit 1c performs level difference detection for extracting a position where a height of the solid lane boundary changes, based on the distance image generated by the distance image generation unit 1b. In this embodiment, a solid lane boundary means a three-dimensional lane boundary that extends continuously to the distant side along the road. For example, the solid lane boundary is a curb, a side ditch, a guardrail, or a pedestrian zone. In the description below, the level difference detection unit 1c calculates a level difference in the road area from the distance image, generated by the distance image generation unit 1b, to detect a solid lane boundary, such as a curb or a ditch, primarily in the near area. The solid lane boundary, which is detected by the level difference detection unit 1c, may be regarded as a first part of a solid lane boundary of the present invention. More specifically, the level difference detection unit 1c extracts a position, where a height of the solid lane boundary changes, based on the distance image generated by the distance image generation unit 1b. In this case, the level difference detection unit 1c may also extract the three-dimensional heights of the pixels from the distance image to generate a height map for extracting the edges. To generate a height map, the method described in "T.Michalke, R.Kastner, J.Fritsch, C.Goerick, "A Self-Adaptive Approach for Curbstone/Roadside Detection based on Human-Like Signal Processing and Multi-Sensor Fusion," Proc. 2010 IEEE Intelligent Vehicles Symp., pp.307-312, 2010" may be used. The level difference detection unit 1c may also extract a level difference by detecting a change in the slope in the distance image. For example, FIG. 4 shows an example in which a level difference is detected by applying a straight line to a level difference candidate extracted based on a change in the slope in a distance image (dashed line (i) shown in FIG. 4). In this case, it is desirable for the level difference detection unit 1c to fit a model, such as a straight line, to the level difference candidate to allow the base image setting unit 1d, which will be described later, to extract a template image. In this embodiment, the road surface area is an area that is set in advance according to the camera orientation as shown in the input image and the distance image in FIG. 4. The road surface may also be limited, as shown in FIG. 5, to an area composed of the near area in the three-dimensional space that is determined by extracting the feet of the tall solid objects from the distance image and by selecting the area below the extracted feet.

In this embodiment, the level difference detection unit 1c detects a level difference only in a pixel area where the disparity amount is sufficiently large. For example, a level difference is detected only in a pixel area where the disparity is a predetermined value or larger (that is, near area). The predetermined value is a value corresponding to the lower limit value of disparity at which a solid lane boundary can be accurately recognized based on the disparity information. This predetermined value, which varies according to the performance of the imaging device 2 or the required accuracy, may be determined by an experiment. In a pixel area where the disparity is smaller than the predetermined value (that is, a distant area), it is difficult to detect a level difference in a low solid lane boundary such as a curb beside the road. Considering this fact, it is thought in this embodiment that the detection evaluation value of a solid lane boundary, detected based on level difference detection, is large in a pixel area where the disparity is a value equal to or larger than the predetermined value; in contrast, it is thought that the detection evaluation value of a solid lane boundary, determined based on level difference detection, is low in a pixel area where the disparity is a value smaller than the predetermined value.

The base image setting unit 1d of the ECU 1 sets an image area in the most distant area as the template image. The image area, which is set by the base image setting unit 1d, may be regarded as a first image area of the present invention. Furthermore, the set image area may have a predetermined size. The most distant area refers to an image area that is included in the solid lane boundary detected by the level difference detection unit 1c and that is most distant from the vehicle. The base image setting unit 1d extracts a small area, which includes the most distant point of the solid lane boundary, from the image data acquired by the image acquisition unit 1a and sets the selected small area as the template image. For example, as shown in FIG. 6, the base image setting unit 1d extracts a specified-size area, the center of which is the most distant point of the detected solid lane boundary, as the template image. The template image shown in FIG. 6 corresponds to the rectangle at the bottom of the range (ii) shown in FIG. 4. The template image size may be a fixed value or may be set according to the resolution or the angle of view of the received image or according to the distance to the most distant point of the solid lane boundary detected through level difference detection. Although the template image is a horizontally long rectangle in the example in the range (ii) shown in FIG. 4, and FIG. 6, the aspect ratio of the template image is not limited to that of the rectangle.

The search area setting unit 1e of the ECU 1 sets a search area, which will be used for searching for a solid lane boundary not detected by the level difference detection unit 1c, from the most distant area on the solid lane boundary, already detected by the level difference detection unit 1c, to the further distant side. In this embodiment, the search area setting unit 1e sets a distant area as a search area to search for the solid lane boundary based on the template image that is set by the base image setting unit 1d. More specifically, the search area setting unit 1e sets an area, in which the solid lane boundary will be searched for by performing template comparison using the template image that is already set, in the distant area in the image data. In this embodiment, the search area setting unit 1e sets the search area based on the size of the template image as shown in FIG. 6. For example, the search area setting unit 1e sets the search area so that the search area is adjacent directly to the top of the selected template image (search area 1 in FIG. 6). The height of this search area is set equal to the height of the template image. That is, this template comparison is a one-dimensional scanning for the solid lane boundary along the image horizontal direction (x direction). The horizontal width of the search area may be determined based on the road curvature to which the template image is applied. In this way, when setting a distant area as the search area, it is desirable for the search area setting unit 1e in this embodiment to set the height of the search area equal to the height of the template image and to set the horizontal position and the width of the search area based on the template selection position and the road curvature. The road curvature, which may be an assumed value as described above, may also be determined using the result of the road boundary detection unit 1g of the frame that is set immediately before.

The search area setting unit 1e may set a search area using the slope of the solid lane boundary detected through level difference detection in the image data. That is, the search area setting unit 1e may predict an area, where a boundary candidate point is likely to be present, based on the solid lane boundary detection result produced by the level difference detection unit 1c and, around the predicted area, set a search area. For example, when the solid lane boundary, detected through level difference detection, rises to the right, it is considered that the solid lane boundary is less likely to turn sharply to the left considering the continuity of the solid lane boundary. Therefore, the search area to the left of the template image may be reduced. In this manner, even if the detection evaluation value of the solid lane boundary, detected based on solid lane boundary detection, is not sufficiently large but is not very low, the solid lane boundary detection result obtained through level difference detection may be used effectively for setting the search area. As a result, if the search area is suitably set in this way, the template comparison range can be narrowed with a possible reduction in the calculation load. In addition, the suitable setting of the search area not only reduces the amount of arithmetic calculation for template comparison but also results in a reduction in erroneous detections.

The comparison determination unit 1f of the ECU 1 performs template comparison for scanning the search area, which is set by the search area setting unit 1e, for an area that matches the template image. By doing so, the comparison determination unit 1f detects a boundary candidate point, which is a candidate for a solid lane boundary, from the most distant area on the solid lane boundary, already detected by the level difference detection unit 1c, to the further distant side. The solid lane boundary, which corresponds to the boundary candidate point, may be regarded as a second part of the solid lane boundary of the present invention. In addition, the solid lane boundary, which corresponds to the boundary candidate point, may be regarded as a part of the solid lane boundary which is not detected by the level difference detection unit 1c. During this processing, the comparison determination unit 1f performs template comparison to detect an area that matches the template image. More specifically, the comparison determination unit 1f scans the search area, which is set by the search area setting unit 1e, to repeatedly perform template comparison for searching for a position most similar to the template image. In this embodiment, an existing method, such as the similarity determination method or the normalized cross correlation using the sum of squared difference (SSD) or the sum of absolute difference (SAD), may be used as the template comparison method. In addition, a method for extracting the feature amount, such as the SIFT feature, from the template image for use in comparison may also be used. This search gives a comparison evaluation value indicating the similarity to the template image (that is, the comparison evaluation value of a boundary candidate point) and its rectangle position. If the comparison evaluation value is larger than the threshold that is set, the comparison determination unit 1f registers the center position of the rectangular area, which matches the template image, as a boundary candidate point that is a candidate for the solid lane boundary. After that, the ECU 1 causes the comparison determination unit 1f to output the rectangle position to the base image setting unit 1d as shown in the range (ii) shown in FIG. 4. The ECU 1 repeats the search for a boundary candidate point according to the similar procedure while causing the base image setting unit 1d to re-set the template image and while causing the search area setting unit 1e to re-set the search area.

The road boundary detection unit 1g of the ECU 1 detects the solid lane boundary in the traffic environment around the vehicle, based on the solid lane boundary detection result produced by the level difference detection unit 1c and the boundary candidate point detection result produced by the comparison determination unit 1f. In doing so, the road boundary detection unit 1g detects the solid lane boundary based on the level difference detected by the level difference detection unit 1c and the comparison position determined by the comparison determination unit 1f. For example, the road boundary detection unit 1g estimates a lane model that fits the level difference position, detected by the level difference detection unit 1c, and the boundary candidate point extracted through template comparison performed by the comparison determination unit 1f and, then, determines the solid lane boundary as the final detection result as indicated by the dashed line (iii) shown in FIG. 4. A straight line or a clothoid curve may be used for the lane model, and the least squares method, nonlinear optimization method, or RANSAC method may be used for parameter estimation. For example, when applying a straight line to the candidate point group $x_i$ (i = 0, ..., N) using the non-linear optimization method (see FIG. 7), the road boundary detection unit 1g may define the function $f_1(s)$, given below, that represents the matching degree between the point group and the straight line and estimate the straight line parameter $s = \{S_0, S_1\}$ that maximizes $f_1(s)$. FIG. 7 shows a bird's-eye view of three-dimensional space. When the origin is the camera position, the figure indicates that the more the points are distributed near the straight line, the higher the matching degree is. For example, the method described in "S.Johnson, The NLopt nonlinear-optimization package, http://ab-initio.mit.edu/nlopt" may be used as the non-linear optimization method.

[Expression 1]

$$f_1(s) = \sum_{i=1}^{N} g(s_0 + s_1 z_i - x_i) \quad \cdots\cdots(1)$$

[Expression 2]

$$g(x) = \exp\left(-\frac{x^2}{2\sigma^2}\right) \quad \cdots\cdots(2)$$

g(x) in expression (2) is the function that returns a larger value as the value of x is nearer to 0. The optimum parameters may be calculated from the function $f_1(s)$ shown in expression (1) and the initial values and the range of the parameters, using the non-linear optimization method. When a quadratic curve or a clothoid curve is applied, expression (1) and the estimation parameter s need be changed.

In this embodiment, if the comparison evaluation value indicating the similarity to the template image (that is, comparison evaluation value of a boundary candidate point) is larger than the threshold that is set, the comparison determination unit 1f registers the center position of the rectangular area, which matches the template image, as a boundary candidate point that is a candidate for the solid lane boundary. On the other hand, if the comparison evaluation value of a boundary candidate point is lower than the threshold, the reliability of the result of template comparison becomes low and, therefore, the comparison determination unit 1f does not register the center position of the rectangular area, which matches the template image, as a boundary candidate point that is a candidate for the solid lane boundary. The reason is that the template comparison usually depends on the brightness information as shown in FIG. 1A and FIG. 1B described above. Therefore, in the area (iii) where the shadow of a surrounding object such as a bridge falls on the curb boundary as shown in FIG. 1B, the change in the light-and-shade density becomes small and, as a result, the template comparison becomes unstable and a correct position cannot sometimes be detected. When the vehicle reaches an area (ii) shown in FIG. 4 in which the shadow falls on the curb boundary, the comparison evaluation value of the boundary candidate point becomes lower than the threshold and the reliability of the result of template comparison becomes low. Therefore, the comparison determination unit 1f does not register the center position of the rectangular area, which matches the template image, as a boundary candidate point.

In such a case, the ECU 1 in this embodiment determines that there is no area in search area 1 that matches the template image through template comparison as shown in FIG. 6 and, using the same template image, causes the search area setting unit 1e to set the next search areas 2 to 3 for template comparison. In this manner, if a reliable position similar to the template is not found in the search area, the ECU 1 skips the registration of a boundary candidate point that is performed by the comparison determination unit 1f and, while causing the search area setting unit 1e to shift the search area in the further distance, continues searching for a boundary candidate point by means of the comparison determination unit 1f. In this manner, if the comparison determination unit 1f cannot find a position where the comparison evaluation value of template comparison is large, the search area setting unit 1e in this embodiment re-sets an area in the further distance as a new search area and continues the search. If the comparison determination unit 1f skips the registration of a boundary candidate point, the ECU 1 should cause the search area setting unit 1e to set the next search area in such a manner that the next search area is horizontally wider than the preceding (lower) search area as shown in FIG. 6. In this case, too, it is desirable to set the next search area considering the road curvature or the continuity of boundary candidate points. FIG. 8 shows an example in which the skip search processing is performed to allow the curb boundary to be estimated successfully in the distance beyond the shadow of the bridge. Unlike the part shown by (ii) in FIG. 4, the part indicated by (iv) in FIG. 8 indicates that the search is not terminated by the shadow area.

The search area setting unit 1e terminates the search when the search is continued over the specified distance or when the specified skip width is exceeded and, then, the processing moves to the processing of the road boundary detection unit 1g. The skip width should be set based on the distance in the three-dimensional space. For example, because the position where the curb is discontinued is used for the entrance/exit of a vehicle, the specified distance or the specified skip width may be set, for example, to the width equivalent to two vehicles (about 5 m). In this manner, when setting a search area in the further distance by means of the search area setting unit 1e in this embodiment, it is desirable that the maximum skip width (height in the image data) be set based on the depth width in the three-dimensional space and that the search be terminated if the width is exceeded.

As described above, if the detection evaluation value of the solid lane boundary detected by the level difference detection unit 1c is lower than a predetermined value and there is a low-evaluation search area where the comparison evaluation value of the boundary candidate point detected by the comparison determination unit 1f is lower than a predetermined value, the base image setting unit 1d re-sets an image area, nearer to the vehicle than the low-evaluation search area, as the template image. The image area, which is re-set by the base image setting unit 1d, may be regarded as a second image area of the present invention. Furthermore, the re-set image area may have a predetermined size. The predetermined value for the solid lane boundary refers to a threshold, which is set in advance based on experimental results, as a value with which the solid lane boundary can be detected as a solid lane boundary with accuracy equal to or higher than a predetermined level. Similarly, the predetermined value for a boundary candidate point refers to a threshold, which is set in advance based on experimental results, as a value with which the boundary candidate point can be compared as a boundary candidate point with accuracy equal to or higher than a predetermined level. After that, the search area setting unit 1e re-sets a new search area in the distant area next to the image area of the low-evaluation search area that is skipped. The comparison determination unit 1f continues template comparison in the search area that is re-set. In this manner, when the vehicle reaches an area where the solid lane boundary can be detected by neither level difference detection nor template comparison, the comparison determination unit 1f in this embodiment skips the area and starts template comparison beginning at the next distant area. More specifically, at level difference detection time or at template comparison time, even if the solid lane boundary is not detected because the detection evaluation value of the solid lane boundary based on level difference detection is low and, at the same time, the solid lane boundary is not detected because the comparison evaluation value of the solid lane boundary based on template comparison is low, for example, when the solid lane boundary is discontinued or a shadow falls on the solid lane boundary, the boundary estimation device in this embodiment skips the area and allows template comparison to be started at the distant area next to the skipped area. As a result, the lane boundary estimation technology can reduce the generation of a situation in which a solid lane boundary in a distant area cannot be estimated.

In this embodiment, when template comparison is performed in the search area that is re-set, it is desirable for the comparison determination unit 1f either to re-set the threshold for the comparison evaluation value, which indicates the similarity to the template image, to a larger value or to blur the template image. By re-setting the threshold for the comparison evaluation value, which indicates the similarity to the template image, to a larger value or by blurring the template image when the comparison determination unit 1f performs template comparison in the search area that is re-set after the skip, this embodiment reduces erroneous detections and increases the comparison accuracy. This is because the difference from the template image increases after a skip and, therefore, in order to detect the boundary candidate point only when the reliability is high, it is efficient to increase the threshold for the comparison evaluation value that indicates the similarity to the template image. In addition, considering the effect of a decrease in the space resolution in the distant area, the comparison accuracy can be increased by blurring the template image.

When template comparison is performed in a re-set search area in this embodiment, it is desirable for the base image setting unit 1d to resize the template image based on the distance or to resize and re-extract the template image. In this embodiment, when template comparison is performed in a re-set search area, the template image can be resized, or can be resized and re-extracted, based on the distance by means of the base image setting unit 1d to reduce erroneous detections and increase the comparison accuracy. The distance information may be used for resizing. For example, the reduction ratio $\gamma$ of the template image can be determined by the depth $z_T$ in the three-dimensional space of the template image and the depth $z_S$ of the search area by expression (3) given below.

[Expression 3]

$$\gamma = \frac{z_S}{z_T} \quad \cdots\cdots (3)$$

When the imaging device 2 is a stereo camera, there is no need to calculate the depth z; instead, the the reduction ratio $\gamma$ can be calculated directly from the disparity d (disparity $d_T$ of the template and disparity $d_S$ of the search area) (expression 4).

[Expression 4]

$$\gamma = \frac{z_S}{z_T} = \frac{d_T}{d_S} \quad \cdots\cdots (4)$$

The vehicle control unit 1h of the ECU 1 performs driving support control along the solid lane boundary on the basis of the solid lane boundary in the traffic environment around the vehicle detected by the road boundary detection unit 1g. The driving support control includes LKA control. For example, the vehicle control unit 1h calculates the traveling path or traveling speed of the vehicle based on various types of information indicating the vehicle speed and acceleration of the vehicle and the area in which the vehicle can travel based on the detected solid lane boundary. The vehicle control unit 1h outputs the control signal, generated based on the arithmetic processing result, to the actuator 3 and performs driving support control by operating the actuator 3.

The configuration of the lane boundary estimation device in the first embodiment has been described.

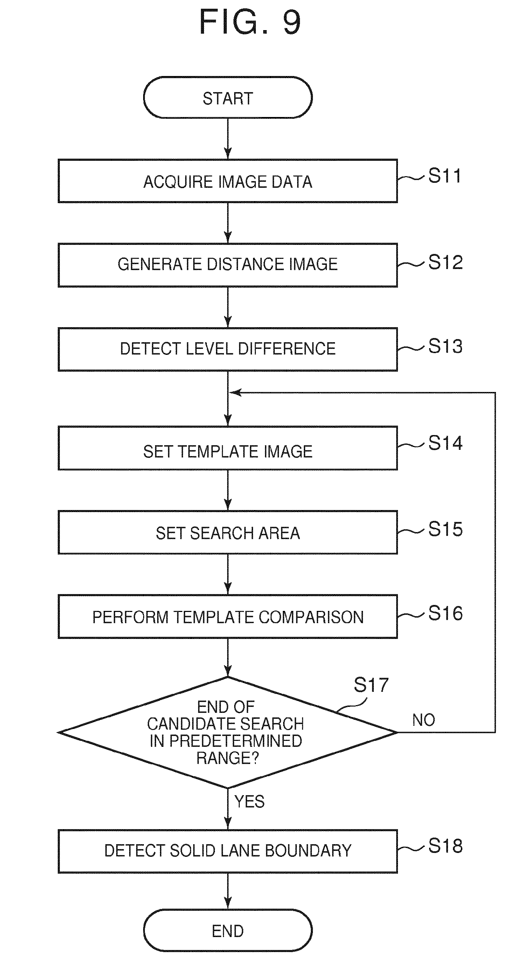

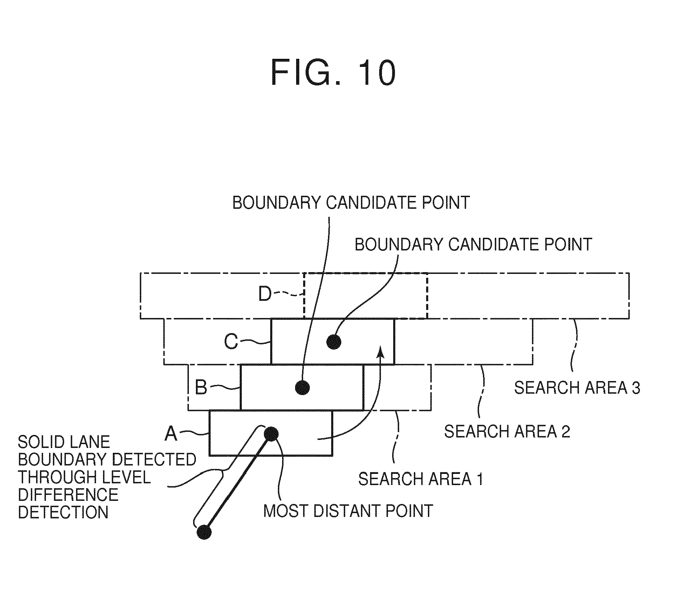

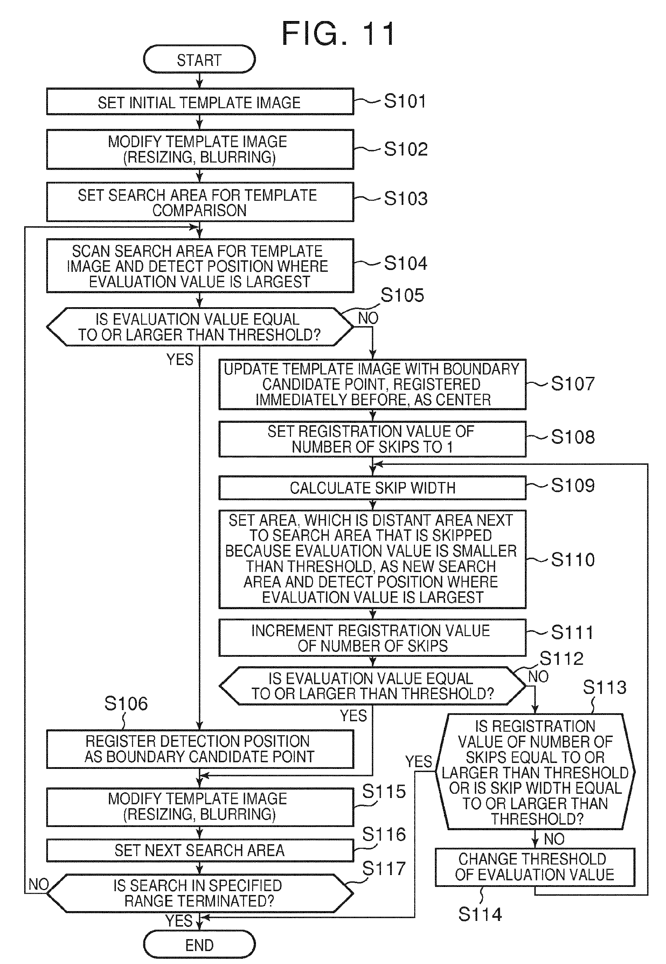

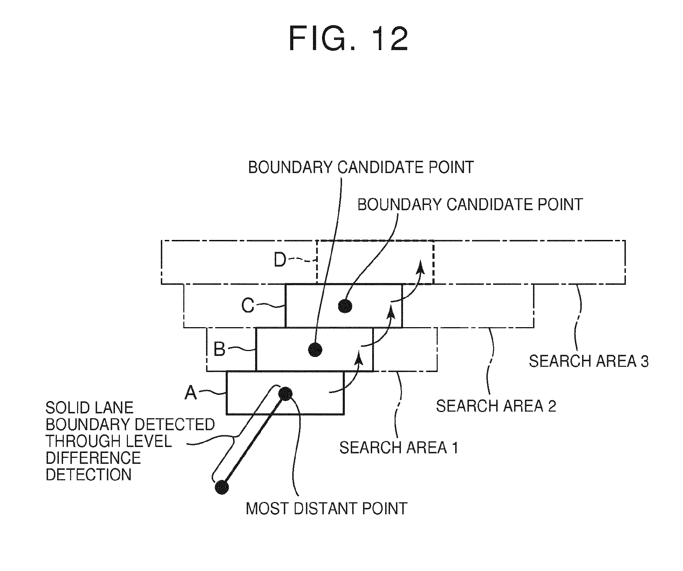

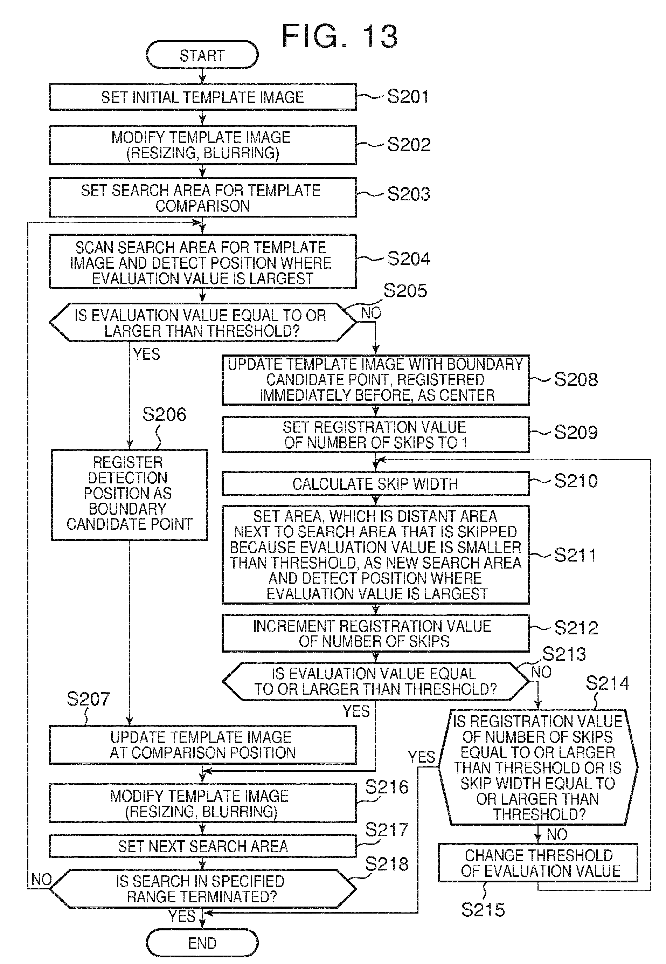

Next, the lane boundary estimation method in the first embodiment, which is performed by the lane boundary estimation device in the first embodiment configured as described above, is described below with reference to FIG. 9 to FIG. 13. FIG. 9 is a flowchart showing an example of the basic processing of the lane boundary estimation device in the first embodiment. FIG. 10 is a diagram showing an example of template switching logic A. FIG. 11 is a flowchart showing the detailed processing of template switching logic A. FIG. 12 is a diagram showing an example of template switching logic B. FIG. 13 is a flowchart showing the detailed processing of template switching logic B.

As shown in FIG. 9, the image acquisition unit 1a acquires image data generated by capturing the traffic environment around the vehicle (step S11). The distance image generation unit 1b generates a distance image based on the image data acquired through the processing of the image acquisition unit 1a in step S11 (step S12). The level difference detection unit 1c performs level difference detection for extracting a position, where a height of the solid lane boundary changes, based on the distance image generated through the processing of the distance image generation unit 1b in step S12 and, thereby, detects a solid lane boundary, which is a three-dimensional lane boundary, from the near side to the distant side of the vehicle (step S13).

The base image setting unit 1d sets the image data of a specified-size area in the most distant area as a template image (step S14). The most distant area mentioned here refers to the image area that is most distant from the vehicle and is on the solid lane boundary detected through the processing of the level difference detection unit 1c in step S13. After that, in step S15, the search area setting unit 1e sets a search area, in which a solid lane boundary not detected through the processing of the level difference detection unit 1c will be searched for, from the most distant area on the solid lane boundary, detected through the processing of the level difference detection unit 1c, to the further distant side (step S15). In step S15, the search area setting unit 1e may also predict an area, in which a boundary candidate point is likely to be present, based on the detection result of the solid lane boundary through the processing of the level difference detection unit 1c, and set the search area around the predicted area. In step S16, in the search area that is set through the processing of the search area setting unit 1e, the comparison determination unit 1f performs template comparison for scanning for an area that matches the template image. By doing so, the comparison determination unit 1f detects a boundary candidate point, which is a candidate for a solid lane boundary not detected through the processing of the level difference detection unit 1c in step S15, from the most distant area on the solid lane boundary, detected through the processing of the level difference detection unit 1c, to the further distant side (step S16). In steps S14 to S16, if the comparison evaluation value of the boundary candidate point detected through the processing of the comparison determination unit 1f is lower than a predetermined value and there is a low-evaluation search area in which the detection evaluation value of the solid lane boundary detected through the processing of the level difference detection unit 1c is lower than a predetermined value, the base image setting unit 1d re-sets the image data of a predetermined size area, which is nearer to the vehicle than the low-evaluation search area, as the template image. In this case, the search area setting unit 1e re-sets a new search area in the distant area next to the image area of the low-evaluation search area that is skipped. After that, the comparison determination unit 1f continues to perform template comparison in the search area that is re-set through the processing of the search area setting unit 1e. The detail of the processing in steps S14 to S16 will be described later.

After the processing in step S16, the ECU 1 determines whether the search for a boundary candidate point within the predetermined range is terminated (step S17). If it is determined in step S17 that the search for the maximum searchable boundary candidate point in the road surface area is not terminated (step S17: No), the ECU 1 returns the processing to the processing in step S14. On the other hand, if it is determined in step S17 that the search for the maximum searchable boundary candidate point in the road surface area is terminated (step S17: Yes), the ECU 1 moves the processing to the processing in step S18 that is the next step.

Next, the road boundary detection unit 1g detects the solid lane boundary in the traffic environment around the vehicle based on the detection result of the solid lane boundary through the processing of the level difference detection unit 1c in step S13 and based on the detection result of the boundary candidate point through the processing the comparison determination unit 1f in step S16 (step S18). After that, the processing is terminated.

In this embodiment, the template image switching method may use template switching logic A in which the template image is changed when the comparison degree of the template image is decreased as shown in FIG. 10 and FIG. 11. Alternatively, the template image switching method may use template switching logic B in which the template image is serially switched as shown in FIG. 12 and FIG. 13. FIG. 11 and FIG. 13 are diagrams showing the detail of steps S14 to S17 in FIG. 9 described above.

First, the detail of template switching logic A is described with reference to FIG. 10 and FIG. 11. FIG. 10 shows an example of template image switching that is performed as follows. First, rectangular area A that is a predetermined area, the center position of which is the most distant point on the solid lane boundary detected through level difference detection, is set as the initial template image. After that, using the template image corresponding to rectangular area A, template comparison is performed sequentially for the search areas each of which includes rectangular areas B to D respectively. Because a boundary candidate point cannot be detected in search area 3, which includes rectangular area D, as a result of the template comparison using the template image corresponding to rectangular area A, the template image is switched from rectangular area A to rectangular area C. The processing corresponding to the example of this template image switching in FIG. 10 is described with reference to FIG. 11. FIG. 11 shows the detail of the processing in steps S14 to S17 in FIG. 9, and the processing shown in FIG. 11 is performed after the processing in step S 13 in FIG. 9.

As shown in FIG. 11, the base image setting unit 1d sets the initial template image (step S101). In step S101, the base image setting unit 1d sets rectangular area A that is a predetermined area, the center position of which is the most distant point on the solid lane boundary detected through level difference detection, as the initial template image as shown in FIG. 10. The base image setting unit 1d modifies the initial template image that is set in step S101 (step S102). In step S102, to reduce erroneous detections and to increase the comparison accuracy in template comparison, the base image setting unit 1d modifies the initial template image, corresponding to rectangular area A shown in FIG. 10, by performing image processing, such as resizing and blurring, according to the distance. After that, the search area setting unit 1e sets a search area for use in template comparison based on the initial template image modified in step S102 (step S103). In step S103, the search area setting unit 1e sets search area 1 that includes rectangular area B shown in FIG. 10. More specifically, as shown in FIG. 10, the search area setting unit 1e sets the search area based on the size of the initial template image (rectangular area A in FIG. 10). For example, the search area setting unit 1e sets the search area in such a way that the search area is adjacent directly to the top of rectangular area A that is the initial template image (search area 1 in FIG. 10). It is desirable that the height of this search area be set equal to the height of the template image and that the horizontal positions and the width of the search area be set based on the template selection position and the road curvature.

The comparison determination unit 1f performs template comparison by scanning the search area, which is set in step S103, for the template image and detects the position, where the evaluation value is largest, as a result of the template comparison (step S104). The comparison determination unit 1f determines whether the evaluation value of the rectangular area, which is detected in step S104 as an area that matches the template image, is equal to or larger than the threshold (step S105). If it is determined in step S105 that the evaluation value is equal to or larger than the threshold (step S105: Yes), the comparison determination unit 1f registers the detection point as the boundary candidate point (step S106). In step S106, the comparison determination unit 1f registers the center position of rectangular area B, shown in FIG. 10, as the boundary candidate point.

The base image setting unit 1d re-modifies the initial template image that is set in step S101 (step S115). In step S115, the base image setting unit 1d re-modifies the initial template image, corresponding to rectangular area A shown in FIG. 10, by performing image processing, such as resizing or blurring, according to the distance. After that, the search area setting unit 1e sets the next search area for performing template comparison based on the initial template image re-modified in step S115 (step S116). In step S116, the search area setting unit 1e sets search area 2 that includes rectangular area C shown in FIG. 10. More specifically, as shown in FIG. 10, the search area setting unit 1e sets the next search area based on the size of the search area (search area 1 in FIG. 10) that is set immediately before. For example, the search area setting unit 1e sets the next search area (search area 2 in FIG. 10) in such a way that the next search area is adjacent directly to the top of search area 1 that is set immediately before. It is desirable that the height of this search area be set equal to the height of the template image and that the horizontal positions and the width of the search area be set based on the template selection position and the road curvature so that the horizontal positions are shifted horizontally to make the width larger than the width of the search area that is set immediately before.

The ECU 1 determines whether the search in the specified range is terminated (step S117). If it is determined in step S117 that the search for the maximum searchable boundary candidate point is not terminated in the road surface area (step S117: No), the ECU 1 returns the processing to the processing in step S104. On the other hand, if it is determined in step S 117 that the search for the maximum searchable boundary candidate point is terminated in the road surface area (step S117: Yes), the ECU 1 terminates the processing and moves the processing to step S18 shown in FIG. 9.

The following describes the processing that is performed if the ECU 1 determines in step S 117 that the search in the specified range is not terminated (step S 117: No). In this case, the comparison determination unit 1f performs template comparison by scanning the search area that is set in step S116 (for example, search area 2 that includes rectangular area C shown in FIG. 10) for the template image and, as a result of the template comparison, detects the position where the evaluation value is largest (step S104). The comparison determination unit 1f determines whether the evaluation value of the rectangular area, which is detected in step S104 as an area that matches the template image, is equal to or larger than the threshold (step S105). If it is determined in step S105 that the evaluation value is equal to or larger than the threshold (step S105: Yes), the comparison determination unit 1f registers the detection point as the boundary candidate point (step S106). In step S106, the comparison determination unit 1f registers the center position of rectangular area C, shown in FIG. 10, as the boundary candidate point.

Next, the base image setting unit 1d re-modifies the initial template image that is set in step S101 (step S115). In step S115, the base image setting unit 1d re-modifies the initial template image, corresponding to rectangular area A shown in FIG. 10, by performing image processing, such as resizing or blurring, according to the distance. After that, the search area setting unit 1e sets the next search area for performing template comparison based on the initial template image re-modified in step S115 (step S116). In step S116, the search area setting unit 1e sets search area 3 that includes rectangular area D shown in FIG. 10. More specifically, as shown in FIG. 10, the search area setting unit 1e sets the next search area based on the size of the search area (search area 2 in FIG. 10) that is set immediately before. For example, the search area setting unit 1e sets the next search area (search area 3 in FIG. 10) in such a way that the next search area is adjacent directly to the top of search area 2 that is set immediately before. It is desirable that the height of this search area be set equal to the height of the template image and that the horizontal positions and the width of the search area be set based on the template selection position and the road curvature so that the horizontal positions are shifted horizontally to make the width larger than the width of the search area that is set immediately before.

The ECU 1 determines whether the search in the specified range is terminated (step S117). The following describes the processing that is performed if it is determined in step S117, again, that the search performed by the ECU 1 in the specified range is not terminated (step S117: No). In this case, the comparison determination unit 1f performs template comparison by scanning the search area that is set in step S116 (for example, search area 3 that includes rectangular area D shown in FIG. 10) for the template image and, as a result of the template comparison, detects the position where the evaluation value is largest (step S104). The comparison determination unit 1f determines whether the evaluation value of the rectangular area, which is detected in step S104 as an area that matches the template image, is equal to or larger than the threshold (step S105).

If it is determined in step S105 that the evaluation value of the rectangular area, which is detected in step S104 as an area that matches the template image, is smaller than the threshold (step S105: No), the comparison determination unit 1f updates the template image with the boundary candidate point, registered immediately before, as the center (step S107). In step S107, the comparison determination unit 1f sets rectangular area C as a new template image as shown in FIG. 10. In this case, the ECU 1 sets the registration value of the number of skips to 1 (step S108) and calculates the skip width (step S109). After that, the comparison determination unit 1f sets the area, which is the distant area next to the search area that is skipped because the evaluation value is smaller than the threshold, as a new search area and detects the position where the evaluation value is largest (step S110). In step S110, the comparison determination unit 1f performs template comparison by scanning the new search area, which is the distant area next to the search area that is set in step S116 (search area 3 that includes rectangular area D shown in FIG. 10) and is skipped, for the new template image that is updated in step S107 and, as a result of the template comparison, detects the position where the evaluation value is largest. In this case, the ECU 1 increments the registration value of the number of skips (step S111). After that, the comparison determination unit 1f determines whether the evaluation value of the rectangular area, which is detected in step S110 as an area that matches the new template image, is equal to or larger than the threshold (step S112). If it is determined in step S 112 that the evaluation value is equal to or larger than the threshold (step S 112: Yes), the comparison determination unit 1f moves the processing to the processing in step S115. On the other hand, it is determined in step S112 that the evaluation value of the rectangular area, which is detected in step S110 as an area that matches the new template image, is smaller than the threshold (step S112: No), the comparison determination unit 1f moves the processing to the processing in step S113 that is the next step.

The following describes the processing that is performed if the comparison determination unit 1f determines, in step S112, that the evaluation value of the rectangular area, which is detected in step S110 as an area that matches the new template image, is smaller than the threshold (step S112: No). In this case, the ECU 1 determines whether the registration value of the number of skips incremented in step S111 is equal to or larger than the threshold or whether the skip width calculated in step S109 is equal to or larger than the threshold (step S113).

If it is determined in step S113 that the number of skips is smaller than the threshold and that the skip width is smaller than the threshold (step S113: No), the ECU 1 changes the threshold of the evaluation value used for the determination processing in step S105 and step S112 (step S114). In step S114, to reduce erroneous detections and to increase the comparison accuracy in template comparison, the ECU 1 sets the threshold for the comparison evaluation value, which indicates the similarity to the template image, to a larger value. After that, the processing moves to the processing in step S109.

On the other hand, if it is determined in step S113 that the number of skips is equal to or larger than the threshold or that the skip width is equal to or larger than the threshold (step S113: Yes), the ECU 1 terminates the processing and moves the processing to the processing in step S18 shown in FIG. 9.

Next, the detail of template switching logic B is described with reference to FIG. 12 and FIG. 13. FIG. 12 shows an example of template image switching that is performed as follows. First, rectangular area A that is a predetermined area, the center position of which is the most distant point on the solid lane boundary detected through level difference detection, is set as the initial template image. After that, using the template image corresponding to rectangular area A, template comparison is performed for search area 1 that includes rectangular area B. After that, the template image is serially switched from rectangular area A to rectangular area B, then, from rectangular area B to rectangular area C, and then from rectangular area C to rectangular area D. The processing corresponding to the example of template image switching in FIG. 12 is described with reference to FIG. 13. FIG. 13 shows the detail of the processing in steps S14 to S17 in FIG. 9, and the processing shown in FIG. 13 is performed after the processing in step S13 in FIG. 9.

As shown in FIG. 13, the base image setting unit 1d sets the initial template image (step S201). In step S201, the base image setting unit 1d sets rectangular area A that is a predetermined area, the center position of which is the most distant point on the solid lane boundary detected through level difference detection, as the initial template image as shown in FIG. 12. The base image setting unit 1d modifies the initial template image that is set in step S201 (step S202). In step S202, to reduce erroneous detections and to increase the comparison accuracy in template comparison, the base image setting unit 1d modifies the initial template image, corresponding to rectangular area A shown in FIG. 12, by performing image processing, such as resizing and blurring, according to the distance. After that, the search area setting unit 1e sets a search area for use in template comparison based on the initial template image modified in step S202 (step S203). In step S203, the search area setting unit 1e sets search area 1 that includes rectangular area B shown in FIG. 12. More specifically, as shown in FIG. 12, the search area setting unit 1e sets the search area based on the size of the initial template image (rectangular area A in FIG. 12). For example, the search area setting unit 1e sets the search area in such a way that the search area is adjacent directly to the top of rectangular area A that is the initial template image (search area 1 in FIG. 12). It is desirable that the height of this search area be set equal to the height of the template image and that the horizontal positions and the width of the search area be set based on the template selection position and the road curvature.

The comparison determination unit 1f performs template comparison by scanning the search area, which is set in step S203, for the template image and detects the position, where the evaluation value is largest, as a result of the template comparison (step S204). The comparison determination unit 1f determines whether the evaluation value of the rectangular area, which is detected in step S204 as an area that matches the template image, is equal to or larger than the threshold (step S205). If it is determined in step S205 that the evaluation value is equal to or larger than the threshold (step S205: Yes), the comparison determination unit 1f registers the detection point as the boundary candidate point (step S206). In step S206, the comparison determination unit 1f registers the center position of rectangular area B, shown in FIG. 12, as the boundary candidate point.

The base image setting unit 1d selects the template image at the comparison position and updates the template image (step S207). In step S207, the base image setting unit 1d sets rectangular area B, shown in FIG. 12, as a new template image. The base image setting unit 1d modifies the template image that is set in step S207 (step S216). In step S216, the base image setting unit 1d re-modifies the template image, corresponding to rectangular area B shown in FIG. 12, by performing image processing, such as resizing or blurring, according to the distance. After that, the search area setting unit 1e sets the next search area for performing template comparison based on the template image modified in step S216 (step S217). In step S217, the search area setting unit 1e sets search area 2 that includes rectangular area C shown in FIG. 12. More specifically, as shown in FIG. 12, the search area setting unit 1e sets the next search area based on the size of the search area (search area 1 in FIG. 12) that is set immediately before. For example, the search area setting unit 1e sets the next search area (search area 2 in FIG. 12) in such a way that the next search area is adjacent directly to the top of search area 1 that is set immediately before. It is desirable that the height of this search area be set equal to the height of the template image and that the horizontal positions and the width of the search area be set based on the template selection position and the road curvature so that the horizontal positions are shifted horizontally to make the width larger than that of the search area that is set immediately before.

The ECU 1 determines whether the search in the specified range is terminated (step S218). If it is determined in step S218 that the search for the maximum searchable boundary candidate point is not terminated in the road surface area (step S218: No), the ECU 1 returns the processing to the processing in step S204. On the other hand, if it is determined in step S218 that the search for the maximum searchable boundary candidate point is terminated in the road surface area (step S218: Yes), the ECU 1 terminates the processing and moves the processing to step S18 shown in FIG. 9.

The following describes the processing that is performed if the ECU 1 determines in step S218 that the search in the specified range is not terminated (step S218: No). In this case, the comparison determination unit 1f performs template comparison by scanning the search area that is set in step S217 (for example, search area 2 that includes rectangular area C shown in FIG. 12) for the template image that is set in step S207 and, as a result of the template comparison, detects the position where the evaluation value is largest (step S204). The comparison determination unit 1f determines whether the evaluation value of the rectangular area, which is detected in step S204 as an area that matches the template image, is equal to or larger than the threshold (step S205). If it is determined in step S205 that the evaluation value is equal to or larger than the threshold (step S205: Yes), the comparison determination unit 1f registers the detection point as the boundary candidate point (step S206). In step S206, the comparison determination unit 1f registers the center position of rectangular area C, shown in FIG. 12, as the boundary candidate point.

The base image setting unit 1d selects the template image at the comparison position and updates the template image (step S207). In step S207, the base image setting unit 1d sets rectangular area C, shown in FIG. 12, as a new template image. The base image setting unit 1d modifies the template image that is set in step S207 (step S216). In step S216, the base image setting unit 1d re-modifies the template image, corresponding to rectangular area C shown in FIG. 12, by performing image processing, such as resizing or blurring, according to the distance. After that, the search area setting unit 1e sets the next search area for performing template comparison based on the template image modified in step S216 (step S217). In step S217, the search area setting unit 1e sets search area 3 that includes rectangular area D shown in FIG. 12. More specifically, as shown in FIG. 12, the search area setting unit 1e sets the next search area based on the size of the search area (search area 2 in FIG. 12) that is set immediately before. For example, the search area setting unit 1e sets the next search area (search area 3 in FIG. 12) in such a way that the next search area is adjacent directly to the top of search area 2 that is set immediately before. It is desirable that the height of this search area be set equal to the height of the template image and that the horizontal positions and the width of the search area be set based on the template selection position and the road curvature so that the horizontals positions are shifted horizontally to make the width larger than the width of the search area that is set immediately before.

The ECU 1 determines whether the search in the specified range is terminated (step S218). The following describes the processing that is performed if it is determined in step S218, again, that the search performed by the ECU 1 in the specified range is not terminated (step S218: No). In this case, the comparison determination unit 1f performs template comparison by scanning the search area that is set in step S217 (for example, search area 3 that includes rectangular area D shown in FIG. 12) for the template image that is set in step S207 and, as a result of the template comparison, detects the position where the evaluation value is largest (step S204). The comparison determination unit 1f determines whether the evaluation value of the rectangular area, which is detected in step S204 as an area that matches the template image, is equal to or larger than the threshold (step S205).

If it is determined in step S205 that the evaluation value of the rectangular area, which is detected in step S204 as an area that matches the template image, is smaller than the threshold (step S205: No), the comparison determination unit 1f updates the template image with the boundary candidate point, registered immediately before, as the center (step S208). In step S208, the comparison determination unit 1f sets rectangular area C as a new template image as shown in FIG. 12. In this case, the ECU 1 sets the registration value of the number of skips to 1 (step S209) and calculates the skip width (step S210). After that, the comparison determination unit 1f sets the area, which is the distant area next to the search area that is skipped because the evaluation value is smaller than the threshold, as a new search area and detects the position where the evaluation value is largest (step S211). In step S211, the comparison determination unit 1f performs template comparison by scanning the new search area, which is the distant area next to the search area that is set in step S217 (search area 3 that includes rectangular area D shown in FIG. 12) and is skipped, for the new template image that is updated in step S208 and, as a result of the template comparison, detects the position where the evaluation value is largest. In this case, the ECU 1 increments the registration value of the number of skips (step S212). After that, the comparison determination unit 1f determines whether the evaluation value of the rectangular area, which is detected in step S211 as an area that matches the new template image, is equal to or larger than the threshold (step S213). If it is determined in step S213 that the evaluation value is equal to or larger than the threshold (step S213: Yes), the comparison determination unit 1f moves the processing to the processing in step S216. On the other hand, it is determined in step S213 that the evaluation value of the rectangular area, which is detected in step S211 as an area that matches the new template image, is smaller than the threshold (step S213: No), the comparison determination unit 1f moves the processing to the processing in step S214 that is the next step.

The following describes the processing that is performed if the comparison determination unit 1f determines, in step S213, that the evaluation value of the rectangular area, which is detected in step S211 as an area that matches the new template image, is smaller than the threshold (step S213: No). In this case, the ECU 1 determines whether the registration value of the number of skips incremented in step S212 is equal to or larger than the threshold or whether the skip width calculated in step S210 is equal to or larger than the threshold (step S214).

If it is determined in step S214 that the number of skips is smaller than the threshold and that the skip width is smaller than the threshold (step S214: No), the ECU 1 changes the threshold of the evaluation value used for the determination processing in step S205 and step S213 (step S215). In step S215, to reduce erroneous detections and to increase the comparison accuracy in template comparison, the ECU 1 sets the threshold for the comparison evaluation value, which indicates the similarity to the template image, to a larger value. After that, the processing moves to the processing in step S210.

On the other hand, if it is determined in step S214 that the number of skips is equal to or larger than the threshold or that the skip width is equal to or larger than the threshold (step S214: Yes), the ECU 1 terminates the processing and moves the processing to the processing in step S18 shown in FIG. 9.

The lane boundary estimation method in the first embodiment has been described.

According to the lane boundary estimation method executed by the lane boundary estimation device in the first embodiment, a solid lane boundary such as a curb, the edge of a pedestrian zone, or a side ditch can be detected far in the distance using a stereo camera. In the related art, a method is known that a template image is selected from the road boundary, detected in the near area, based on the height information for use in searching the distant area for a similar pattern. However, the method in the related art cannot compare the template image with an image clearly in a position where the curb is discontinued at the entrance of a shop or where the shadow of a surrounding object falls. In contrast, the method in this embodiment can detect the solid lane boundary far in the distance even when there is such a sudden change in texture. As a result, this embodiment allows the lane boundary estimation technology to reduce the generation of a situation in which the solid lane boundary in a distant area cannot be estimated.

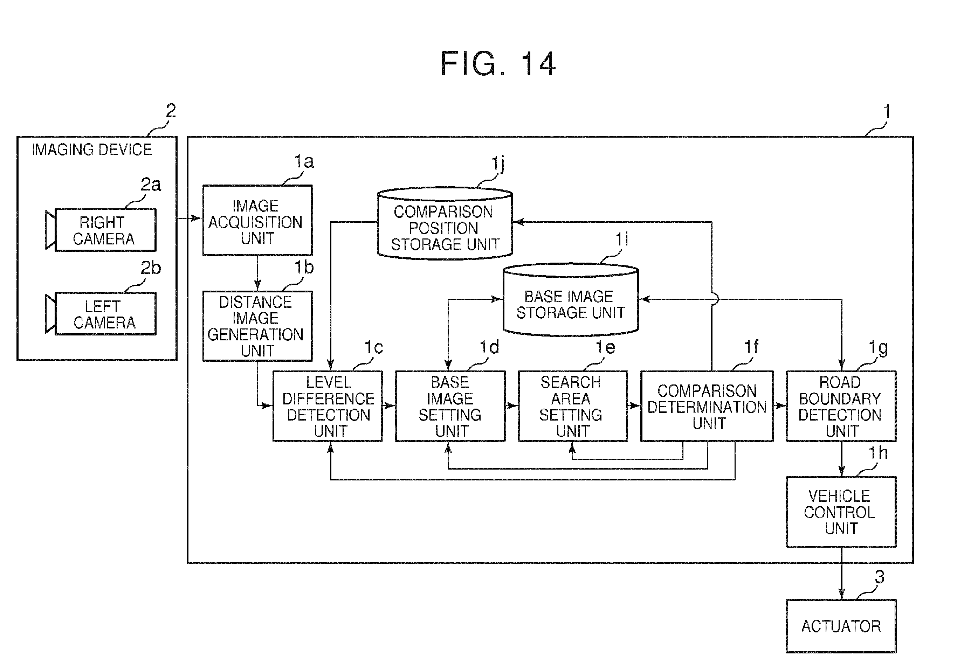

The configuration of a lane boundary estimation device in a second embodiment is described below with reference to FIG. 14. FIG. 14 is a diagram showing a configuration of the lane boundary estimation device in the second embodiment. In the second embodiment, the description similar to that of the first embodiment is omitted and only the part different from that in the first embodiment is described.

As shown in FIG. 14, an ECU 1 of the lane boundary estimation device in the second embodiment includes at least an image acquisition unit 1a, a distance image generation unit 1b, a level difference detection unit 1c, a base image setting unit 1d, a search area setting unit 1e, a comparison determination unit 1f, a road boundary detection unit 1g, a vehicle control unit 1h, a base image storage unit 1i, and a comparison position storage unit 1j. For the detail of the processing units (image acquisition unit 1a to comparison position storage unit 1j) of the ECU 1 shown in FIG. 14, only the part different from the configuration of the ECU 1 of the lane boundary estimation device in the first embodiment shown FIG. 2 is described below.

The base image storage unit 1i of the ECU 1 stores the template images of a predetermined area, which includes a solid lane boundary, extracted in the previous frames including the immediately preceding frame. The base image storage unit 1i may store the template image selected in the immediately preceding frame by the base image setting unit 1d or may select the template image based on the final detection result of a solid lane boundary detected by the road boundary detection unit 1g. It is desirable that the stored images be classified according to the distance and saved in the format compatible with a plurality of image sizes (resolutions). The stored images need not necessarily be updated for each frame, but may be updated once for several frames. Whether to update stored images may be determined according to the comparison evaluation value of the comparison determination unit 1f, and the stored images may be updated when the evaluation value is large and the comparison result is reliable.

The base image setting unit 1d first selects the template image according to the level difference detection result detected by the level difference detection unit 1c. However, a level difference is not always be detected by the level difference detection unit 1c. This is because, even in the near area of the vehicle, the disparity information cannot sometimes be obtained with sufficient density or accuracy depending upon the lighting condition (shadow on road surface, no texture, etc.). Even in such a case, the base image setting unit 1d sets the stored image, which is saved in the base image storage unit 1i, as the template image, enabling a solid lane boundary to be searched for and estimated.

The comparison position storage unit 1j of the ECU 1 stores the position information on an area similar to the template image. The stored information indicates a position where the solid lane boundary is predicted to be positioned in the image in the next frame, considering the vehicle's momentum (translation amount, rotation amount, etc.) between observations. This information is information on the position of a candidate for the road boundary. Because the level difference information detected in this prediction area is more reliable than other information, the level difference detection unit 1c assigns a reliability flag to this level difference information so this information is used preferentially by the road boundary detection unit 1g when detecting the solid lane boundary. When the level difference detection processing is performed for the prediction area, it is also possible to change the detection threshold in the prediction area to a value lower than that of the other areas to allow a level difference to be detected more easily.

In the second embodiment, if an area similar to the template image is detected and, around that area, a level difference detection result is obtained, the comparison determination unit 1f extracts the level difference, which continuously extends from that area to a further distant side, as a solid lane boundary and adds the extracted solid lane boundary to the already acquired result. In the first embodiment described above, the processing is divided into the two, level difference detection in the near area and template comparison in the distant area, according to the distance to the area. Unlike in the case of the first embodiment, there is no processing division in the second embodiment between level difference and template comparison; that is, in the second embodiment, level difference is used as distant as possible and the function of template comparison is used in the near area. As a result, the second embodiment eliminates the need to divide the processing into the two, level difference detection in the near area and template comparison in the distant area, according to the distance to the area. Instead, the second embodiment allows level difference to be used in an area as distant as possible and the function of template comparison to be used in the near area. For example, consider the case in which the disparity on the road surface cannot be detected with sufficient density and accuracy even in the near area due to the effect of the shadow of a roadside object. In such a case, when there is a range where the disparity cannot be obtained partially in the near area, the road boundary search is performed for the part ahead of that area through template comparison. Because failure to obtain the disparity makes it difficult to perform texture comparison, several search areas are skipped and, after passing through the shadow area, the result of texture comparison is obtained. At this time, if sufficient level difference information can be acquired after passing through the shadow area, the template comparison is not continued but the boundary is extracted again by detecting a level difference. This reduces the amount of arithmetic processing, resulting in quick processing.

In the second embodiment, the comparison determination unit 1f determines whether the area is similar to the template by evaluating both the evaluation value of template comparison and the evaluation value of level difference detection. Adding the result of level difference detection to the positioning of template comparison in this manner in the second embodiment increases the accuracy. If the level difference detection result is obtained in a search area in which template comparison is performed as described above, it is considered that the detected solid lane boundary is in a position where a template matching occurs and, in addition, the level difference is detected. By considering both evaluation values, the second embodiment prevents a template comparison error.

In addition, the comparison position storage unit 1j saves the candidate positions detected through template comparison up to the immediately preceding frame. When detecting a level difference in the current frame, the level difference detected in the candidate positions is preferentially extracted for use by the road boundary detection unit 1g to detect the solid lane boundary. Therefore, the second embodiment makes it easy to extract level difference information in an area that is considered a candidate because the evaluation value of the template comparison of the frames up to the immediately preceding frame is large. As a result, the second embodiment allows a larger amount of reliable level difference information to be extracted in a more distant area, thus increasing the detection performance.

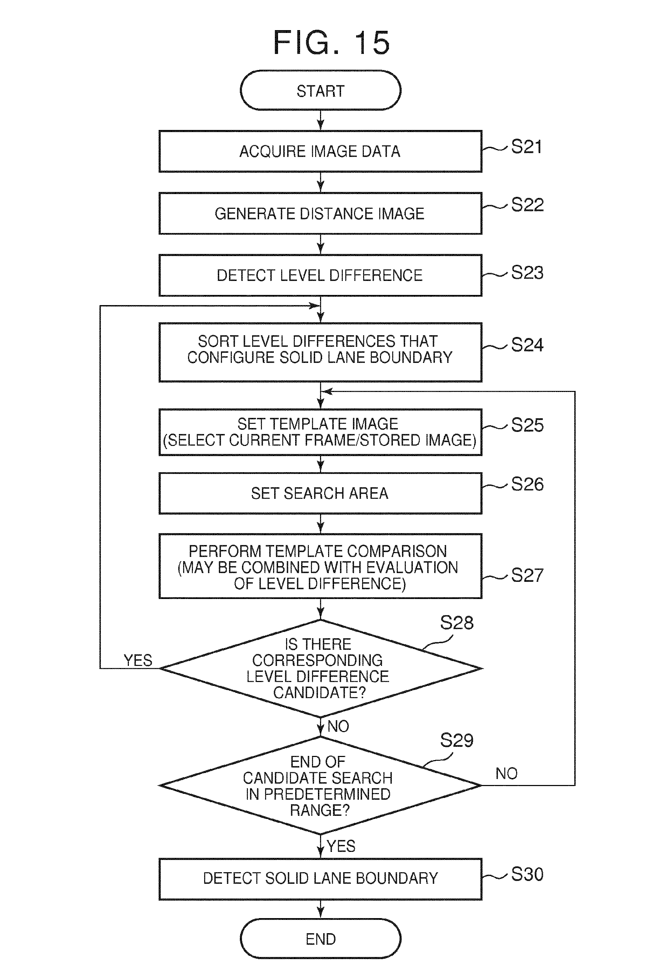

Next, a lane boundary estimation method in the second embodiment, which is executed by the lane boundary estimation device in the second embodiment configured as described above, is described below with reference to FIG. 15. FIG. 15 is a flowchart showing an example of the basic processing of the lane boundary estimation device in the second embodiment.

As shown in FIG. 15, the image acquisition unit 1a acquires image data generated by capturing the traffic environment around the vehicle (step S21). The distance image generation unit 1b generates a distance image based on the image data acquired through the processing of the image acquisition unit 1a in step S21 (step S22). The level difference detection unit 1c performs level difference detection for extracting a position, where a height of the solid lane boundary changes, based on the distance image generated through the processing of the distance image generation unit 1b in step S22 and, thereby, detects a solid lane boundary, which is a three-dimensional lane boundary, from the near side to the distant side of the vehicle (step S23).

The level difference detection unit 1c sorts the level differences each of which configures the solid lane boundary detected based on level difference detection (step S24). In step S24, the level difference detection unit 1c assigns a reliability flag, which indicates the level of the detection evaluation value, to the image area of the level differences, each of which configures the solid lane boundary, according to the detection evaluation value determined based on level difference detection. If, as a result of the sorting in step S24, there is an image area where the detection evaluation value of the solid lane boundary detected based on level difference detection is low, the base image setting unit 1d sets the image data of a predetermined size area in the most distant area on the solid lane boundary, detected through the processing of the level difference detection unit 1c in step S23, as the template image (step S25). In step S25, the base image setting unit 1d may set the stored image, saved in the base image storage unit 1i, as the template image.

The search area setting unit 1e sets a search area, in which a solid lane boundary not detected through the processing of the level difference detection unit 1c will be searched for, from the most distant area on the solid lane boundary, detected through the processing of the level difference detection unit 1c, to the further distant side (step S26). In this case, the search area setting unit 1e may predict an area, in which a boundary candidate point is likely to be present, based on the detection result of the solid lane boundary through the processing of the level difference detection unit 1c, and set the search area around the predicted area.

In the search area that is set through the processing of the search area setting unit 1e in step S26, the comparison determination unit 1f performs template comparison for scanning for an area that matches the template image. By doing so, the comparison determination unit 1f detects a boundary candidate point, which is a candidate for a solid lane boundary not detected through the processing of the level difference detection unit 1c in step S23, from the most distant area on the solid lane boundary, detected through the processing of the level difference detection unit 1c, to the further distant side (step S27). In step S27, the ECU 1 may perform template comparison by means of the comparison determination unit 1f, as well as level difference detection by means of the level difference detection unit 1c, in the search area.

In steps S25 to S27, if there is a search area in which the detection evaluation value of the solid lane boundary is low and the comparison evaluation value of the boundary candidate point is low, the base image setting unit 1d re-sets the image data of the predetermined-size area, which is nearer to the vehicle than the search area in which the comparison evaluation value of the boundary candidate point is low, as the template image. In this case, the search area setting unit 1e skips the search area, in which the comparison evaluation value of the boundary candidate point is low, and re-sets a new search area in an area more distant from that search area. After that, the comparison determination unit 1f continues to perform template comparison in the search area that is re-set through the processing of the search area setting unit 1e. The detail of the processing in steps S25 to S27 is the same as the detail of the processing in the first embodiment.

After the processing in step S27, the ECU 1 determines whether there is a corresponding level difference candidate (step S28). In step S28, the ECU 1 determines whether there is an image area in which the level difference detection unit 1c can detect a level difference. If it is determined by the processing of the ECU 1 that there is a corresponding level difference candidate in step S28, (step S28: Yes), the processing returns to step S24. On the other hand, if it is determined by the processing of the ECU 1 that there is not a corresponding level difference candidate in step S28 (step S28: No), the processing moves to step S29.

If it is determined in step S28 that there is not a corresponding level difference candidate (step S28: No), the ECU 1 determines whether the search for a boundary candidate point in the predetermined range is terminated (step S29). If it is determined in step S29 that the search for the maximum searchable boundary candidate point in the road surface area is not terminated (step S29: No), the ECU 1 returns the processing to step S25. On the other hand, if it is determined in step S29 that the search for the maximum searchable boundary candidate point in the road surface area is terminated (step S29: Yes), the ECU 1 moves the processing to step S30 that is the next step.

Next, based on the detection result of the solid lane boundary detected through the processing of the level difference detection unit 1c in step S23 and based on the detection result of the boundary candidate point detected through the processing of the comparison determination unit 1f and the detection result of the solid lane boundary detected through the processing of the level difference detection unit 1c in step S27, the road boundary detection unit 1g detects the solid lane boundary in the traffic environment around the vehicle (step S30). In step S30, the road boundary detection unit 1g detects the solid lane boundary in the traffic environment around the vehicle with priority placed on the detection result of the solid lane boundary detected by the level difference detection unit 1c rather than on the detection result of the boundary candidate point detected by the comparison determination unit 1f when the detection evaluation value of the solid lane boundary detected by the level difference detection unit 1c is large as compared when the detection evaluation value is small. In addition, in step S30, when the detection evaluation value of the solid lane boundary detected by the level difference detection unit 1c is larger than the base value, the road boundary detection unit 1g detects the solid lane boundary in the traffic environment around the vehicle with priority placed on the detection result of the solid lane boundary detected by the level difference detection unit 1c rather than on the detection result of the boundary candidate point detected by the comparison determination unit 1f; on the other hand, when the detection evaluation value of the solid lane boundary detected by the level difference detection unit 1c is smaller than the base value, the road boundary detection unit 1g detects the solid lane boundary in the traffic environment around the vehicle with priority placed on the detection result of the boundary candidate point detected by the comparison determination unit 1f rather than on the detection result of the solid lane boundary detected by the level difference detection unit 1c. After that, the processing is terminated.

If template comparison is started from a search area that is set when the search area that is set is sufficiently near to the vehicle or when the solid lane boundary approaches the vehicle while skipping the search area, priority is placed on the estimation of the solid lane boundary performed through template comparison rather than on the estimation of the solid lane boundary based on the result of level difference detection in some case, regardless of the fact that the detection evaluation value detected through level difference detection is larger. However, even in such a situation, the detection method is switched appropriately in the second embodiment as described above according to the detection evaluation value for estimating the solid lane boundary.

**Claims**

1. A lane boundary estimation device (1) **characterized by** comprising:

an image acquisition unit (1a) configured to acquire image data generated by capturing a traffic environment around a vehicle;
a distance image generation unit (1b) configured to generate a distance image based on the image data;
a level difference detection unit (1c) configured to detect a first part of a solid lane boundary from a near side of the vehicle to a distant side by performing level difference detection to extract, based on the distance image, a position where a height of the solid lane boundary changes, the solid lane boundary being a three-dimensional lane boundary;
a base image setting unit (1d) configured to set a first image area in a most distant area as a template image, the most distant area being an image area that is most distant from the vehicle in the first part;
a search area setting unit (1e) configured to set a search area from the most distant area to a further distant side;
a comparison determination unit (1f) configured to detect a boundary candidate point from the most distant area to the further distant side by performing template comparison in which the search area is scanned for an area that matches the template image, the boundary candidate point being a candidate for a second part of the solid lane boundary; and
a road boundary detection unit (1g) configured to detect the solid lane boundary in the traffic environment based on a detection result of the first part by the level difference detection unit and a detection result of the boundary candidate point by the comparison determination unit, wherein
when a detection evaluation value of the first part is lower than a first predetermined value and the search area includes a low-evaluation search area, the base image setting unit re-sets a second image area as the template image, the second image area being nearer to the vehicle than the low-evaluation search area, and the low-evaluation search area being a search area where a comparison evaluation value of the boundary candidate point is lower than a second predetermined value,
the search area setting unit is configured to skip the low-evaluation search area and to re-set a new search area from a further image area than the low-evaluation search area to a further distant side, and

the comparison determination unit is configured to perform the template comparison in the search area that is re-set.

2. The lane boundary estimation device according to claim 1, wherein

the level difference detection unit is configured to further perform the level difference detection in the search area, and

the road boundary detection unit detects the solid lane boundary in the traffic environment with priority placed on the detection result of the first part rather than on the detection result of the boundary candidate point, when the detection evaluation value of the first part is large as compared when the detection evaluation value is small.

3. The lane boundary estimation device according to claim 2, wherein

when the detection evaluation value of the first part is larger than a base value, the road boundary detection unit detects the solid lane boundary in the traffic environment with priority placed on the detection result of the first part rather than on the detection result of the boundary candidate point, and

when the detection evaluation value of the first part is smaller than the base value, the road boundary detection unit detects the solid lane boundary in the traffic environment with priority placed on the detection result of the boundary candidate point rather than on the detection result of the first part.

4. The lane boundary estimation device according to any one of claims 1 to 3, wherein

the search area setting unit is configured to predict an area where the boundary candidate point is likely to be present based on the detection result of the first part, and is configured to set the search area around the predicted area.

5. The lane boundary estimation device according to any one of claims 1 to 3, wherein

the first image area has a predetermined size, and the second image area has a predetermined size.

6. A lane boundary estimation method **characterized by** comprising:

acquiring image data generated by capturing a traffic environment around a vehicle;

generating a distance image based on the image data;

detecting a first part of a solid lane boundary from a near side of the vehicle to a distant side by performing level difference detection to extract, based on the distance image, a position where a height of the solid lane boundary changes, the solid lane boundary being a three-dimensional lane boundary;

setting a first image area in a most distant area as a template image, the most distant area being an image area that is most distant from the vehicle in the first part;

setting a search area from the most distant area to a further distant side;

detecting a boundary candidate point from the most distant area to the further distant side by performing template comparison in which the search area is scanned for an area that matches the template image, the boundary candidate point being a candidate for a second part of the solid lane boundary; and

detecting the solid lane boundary in the traffic environment based on a detection result of the first part and a detection result of the boundary candidate point, wherein

when a detection evaluation value of the first part is lower than a first predetermined value and the search area includes a low-evaluation search area, a second image area is re-set as the template image, the second image area being nearer to the vehicle than the low-evaluation search area, and the low-evaluation search area being a search area where a comparison evaluation value of the boundary candidate point is lower than a second predetermined value,

when the search area includes the low-evaluation search area, the low-evaluation search area is skipped and a new search area is re-set from a further image area than the low-evaluation search area to a further distant side, and

the template comparison is performed in the search area that is re-set.

7. The lane boundary estimation method according to claim 6, wherein

the first image area has a predetermined size, and the second image area has a predetermined size.

# FIG. 1A

(ii)

(i)

# FIG. 1B

(iii)

# FIG. 2

# FIG. 3

# FIG. 4

ROAD SURFACE AREA

ROAD SURFACE AREA

① INPUT IMAGE

② DISTANCE IMAGE

(i)

③ LEVEL DIFFERENCE DETECTION RESULT

(ii)

④ SEARCH THROUGH TEMPLATE COMPARISON

(iii)

⑤ FINAL DETECTION RESULT

# FIG. 5

~ ROAD SURFACE
AREA

# FIG. 6

BOUNDARY CANDIDATE POINT

SEARCH AREA 3

SEARCH AREA 2

SEARCH AREA 1

TEMPLATE IMAGE

SOLID LANE BOUNDARY
DETECTED THROUGH
LEVEL DIFFERENCE
DETECTION

MOST DISTANT POINT

# FIG. 7

$x = S_0 + S_1 z$

$(x_i, z_i)$   $g(x-x_i)$

# FIG. 8

(iv)

# FIG. 9

START

ACQUIRE IMAGE DATA — S11

GENERATE DISTANCE IMAGE — S12

DETECT LEVEL DIFFERENCE — S13

SET TEMPLATE IMAGE — S14

SET SEARCH AREA — S15

PERFORM TEMPLATE COMPARISON — S16

END OF CANDIDATE SEARCH IN PREDETERMINED RANGE? — S17

NO

YES

DETECT SOLID LANE BOUNDARY — S18

END

# FIG. 10

BOUNDARY CANDIDATE POINT

BOUNDARY CANDIDATE POINT

D

C

B

A

SEARCH AREA 3

SEARCH AREA 2

SOLID LANE
BOUNDARY DETECTED
THROUGH LEVEL
DIFFERENCE
DETECTION

SEARCH AREA 1

MOST DISTANT POINT

# FIG. 11

START

SET INITIAL TEMPLATE IMAGE — S101

MODIFY TEMPLATE IMAGE (RESIZING, BLURRING) — S102

SET SEARCH AREA FOR TEMPLATE COMPARISON — S103

SCAN SEARCH AREA FOR TEMPLATE IMAGE AND DETECT POSITION WHERE EVALUATION VALUE IS LARGEST — S104

S105 IS EVALUATION VALUE EQUAL TO OR LARGER THAN THRESHOLD? — NO

YES

UPDATE TEMPLATE IMAGE WITH BOUNDARY CANDIDATE POINT, REGISTERED IMMEDIATELY BEFORE, AS CENTER — S107

SET REGISTRATION VALUE OF NUMBER OF SKIPS TO 1 — S108

CALCULATE SKIP WIDTH — S109

SET AREA, WHICH IS DISTANT AREA NEXT TO SEARCH AREA THAT IS SKIPPED BECAUSE EVALUATION VALUE IS SMALLER THAN THRESHOLD, AS NEW SEARCH AREA AND DETECT POSITION WHERE EVALUATION VALUE IS LARGEST — S110

INCREMENT REGISTRATION VALUE OF NUMBER OF SKIPS — S111

S112 IS EVALUATION VALUE EQUAL TO OR LARGER THAN THRESHOLD? — NO

YES

S106
REGISTER DETECTION POSITION AS BOUNDARY CANDIDATE POINT

S113 IS REGISTRATION VALUE OF NUMBER OF SKIPS EQUAL TO OR LARGER THAN THRESHOLD OR IS SKIP WIDTH EQUAL TO OR LARGER THAN THRESHOLD? — YES

NO

CHANGE THRESHOLD OF EVALUATION VALUE

S114

MODIFY TEMPLATE IMAGE (RESIZING, BLURRING) — S115

SET NEXT SEARCH AREA — S116

S117 IS SEARCH IN SPECIFIED RANGE TERMINATED? — NO

YES

END

EP 2 960 829 A2

# FIG. 12

BOUNDARY CANDIDATE POINT

BOUNDARY CANDIDATE POINT

D

C

B

A

SOLID LANE
BOUNDARY DETECTED
THROUGH LEVEL
DIFFERENCE
DETECTION

MOST DISTANT POINT

SEARCH AREA 1

SEARCH AREA 2

SEARCH AREA 3

# FIG. 13

START

SET INITIAL TEMPLATE IMAGE — S201

MODIFY TEMPLATE IMAGE
(RESIZING, BLURRING) — S202

SET SEARCH AREA FOR TEMPLATE
COMPARISON — S203

SCAN SEARCH AREA FOR TEMPLATE
IMAGE AND DETECT POSITION WHERE
EVALUATION VALUE IS LARGEST — S204

S205
IS EVALUATION VALUE EQUAL TO OR
LARGER THAN THRESHOLD? — NO

YES

UPDATE TEMPLATE IMAGE WITH BOUNDARY
CANDIDATE POINT, REGISTERED
IMMEDIATELY BEFORE, AS CENTER — S208

SET REGISTRATION VALUE
OF NUMBER OF SKIPS TO 1 — S209

S206

REGISTER
DETECTION
POSITION AS
BOUNDARY
CANDIDATE
POINT

CALCULATE SKIP WIDTH — S210

SET AREA, WHICH IS DISTANT AREA
NEXT TO SEARCH AREA THAT IS SKIPPED
BECAUSE EVALUATION VALUE IS SMALLER
THAN THRESHOLD, AS NEW SEARCH AREA
AND DETECT POSITION WHERE
EVALUATION VALUE IS LARGEST — S211

INCREMENT REGISTRATION VALUE
OF NUMBER OF SKIPS — S212

S213
IS EVALUATION VALUE EQUAL
TO OR LARGER THAN THRESHOLD? — NO

S214

YES

S207

UPDATE TEMPLATE IMAGE
AT COMPARISON POSITION

IS REGISTRATION VALUE
OF NUMBER OF SKIPS
EQUAL TO OR LARGER
THAN THRESHOLD OR IS
SKIP WIDTH EQUAL TO
OR LARGER THAN
THRESHOLD? — YES

MODIFY TEMPLATE IMAGE
(RESIZING, BLURRING) — S216

NO

SET NEXT SEARCH AREA — S217

CHANGE THRESHOLD
OF EVALUATION VALUE

NO
IS SEARCH IN SPECIFIED
RANGE TERMINATED? — S218

S215

YES

END

# FIG. 14

EP 2 960 829 A2

# FIG. 15

```
                    ┌─────────────┐
                    │    START    │
                    └──────┬──────┘
                           │
              ┌────────────▼─────────────┐
              │    ACQUIRE IMAGE DATA     │───S21
              └────────────┬─────────────┘
                           │
              ┌────────────▼─────────────┐
              │  GENERATE DISTANCE IMAGE  │───S22
              └────────────┬─────────────┘
                           │
              ┌────────────▼─────────────┐
              │   DETECT LEVEL DIFFERENCE │───S23
              └────────────┬─────────────┘
```

SORT LEVEL DIFFERENCES THAT CONFIGURE SOLID LANE BOUNDARY ── S24

SET TEMPLATE IMAGE (SELECT CURRENT FRAME/STORED IMAGE) ── S25

SET SEARCH AREA ── S26

PERFORM TEMPLATE COMPARISON (MAY BE COMBINED WITH EVALUATION OF LEVEL DIFFERENCE) ── S27

IS THERE CORRESPONDING LEVEL DIFFERENCE CANDIDATE? ── S28

YES

NO

END OF CANDIDATE SEARCH IN PREDETERMINED RANGE? ── S29

NO

YES

DETECT SOLID LANE BOUNDARY ── S30

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013161190 A
- JP 2013142972 A

### Non-patent literature cited in the description

- H.Hirschumuller,"Accurate and Efficient Stereo Processing by Semi-Global Matching and Mutual Information. *Proc.IEEE Conf. on Computer Vision and Pattern Recognition,* 2005, vol. 2, 807-814
- **A. GEIGER ; M.ROSER ; R.URTASUN.** Efficient large-scale stereo matching. *Proc.Asian Conf. on Computer Vision,* 2010
- **T.MICHALKE ; R.KASTNER ; J.FRITSCH ; C.GO-ERICK.** A Self-Adaptive Approach for Curbstone/Roadside Detection based on Human-Like Signal Processing and Multi-Sensor Fusion. *Proc. 2010 IEEE Intelligent Vehicles Symp.,* 2010, 307-312